# EUROPEAN PATENT APPLICATION

(11) **EP 4 597 713 A1**
(43) Date of publication of application: **06.08.2025**
(21) Application number: 24155561.4
(22) Date of filing: 02.02.2024
(51) Int. Cl.: H01M 50/289, H01M 50/293, H01M 10/54, H01M 10/613, H01M 10/625, H01M 10/6554, H01M 10/6556, H01M 50/242, H01M 50/249, H01M 50/264

(54) **BATTERY PACK WITH CONTAINING MEMBER COMPRISING A SELF-EXPENDABLE FILLER MATERIAL**

(71) Applicant: Rimac Technology LLC, 10431 Sveta Nedelja (HR)
(72) Inventor: Gracin, Roko, 10000 Zagreb (HR)
(74) Representative: Sonnenberg Harrison Partnerschaft mbB

(57) **Abstract**

A battery pack is disclosed. The battery pack comprises at least one part of a housing, at least one battery system arranged in the at least one part of the housing, at least one containing member contacted with the at least one part of the housing and the at least one battery system, the at least one containing member comprises a self-expendable filler material, the at least one containing member with the self-expendable filler material is contacted with the at least one part of the housing to provide stability to the battery pack and/or to the at least one battery system with respect to the at least one part of the housing.

## Description

### FIELD OF THE INVENTION

The present invention relates to a battery pack, at least two battery systems arranged in a battery pack and a method for manufacturing a battery pack.

### BACKGROUND OF THE INVENTION

In the realm of energy storage systems and electric power applications, especially in the field of hybrid electric vehicles (HEVs) and electric vehicles (EVs), several challenges arise when it comes to battery systems. The battery systems in the HEVs and in the EVs must be high-performing, inexpensive, robust, and safe.

In this context, the developing research areas are focused on developing battery packs with enhanced performance, increased robustness, heightened safety, and reduced costs. These performing properties are highly dependent on an integration of the battery modules and/or cells in the battery packs.

The integration of the battery modules and/or cells in the battery packs is further designed relative to constraints applying to the battery packs, such as structural constraints, mechanical constraints, electrical safety constraints and thermal constraints.

The structural constraints refer to the structural configuration of the elements of the battery pack, such as the battery modules and/or cells, and of the elements in the battery pack, such as the electronic assembly.

The mechanical constraints refer to protection points for shock, vibration and crush of the battery packs, desired attachment points to the HEVs and to the EVs, and the mechanical interfaces with other components in the HEVs and in the EVs. The mechanical constraints are, for example, the stability of the battery pack and/or the battery modules and/or cells in the battery pack.

The electrical safety constraints refer to overcharge/discharge and short circuits of the battery modules and/or cells.

The thermal constraints refer to thermal shocks and local heating that occur in using the battery packs.

Battery accidents, disasters, defects, and poor control systems result in mechanical damage, thermal damage and/or electrical damage. This damage can trigger side reactions in battery packs, such as internal short circuit, external short circuit, or electrolyte leakage, which can lead to cell thermal runaway. The cell thermal runaway may generate smoke, fires, or even explosions. Mechanical abuse, such as collision, electrical abuse, such as overcharging or short-circuit, thermal abuse, such as overheating or thermal shock may also cause fire events or thermal runaway events in the HEVs and in the EVs.

The research areas in the field of battery packs comprise one development to provide battery packs with an enhanced energy density: the cell-to-pack (CTP) approach. The battery cells in the CTP approach are arranged directly in the battery packs.

Advantages of the CTP approach may be, for example, an enhancement of the volume utilization rate of the battery packs, a reduction of the number of components in the battery packs, i.e., battery modules are eliminated, and an enhancement of production efficiency, with a reduction of the manufacturing cost of battery packs, especially in traction batteries.

The CTP approach may ensure that the battery cells respond to the mechanical constraints, the electrical safety constraints, and the thermal constraints. However, the increase of the available space in the battery packs of the CTP approach results in challenges.

Void space between the battery cells and the battery modules in conventional battery packs is used to manage cell to cell propagation. Conventional structural beams within the battery packs help to manage crash loads and durability of the battery packs and the respective vehicle.

Managing the space and the structural configuration of the void space inside the battery modules and/or battery packs should therefore be addressed.

In addition, recycling and repairing the battery packs in a current context of environmental awareness is of high relevance. The battery packs should be configured so that battery modules and/or battery cells may be easily removable and replaceable. However, this may be challenging in the CTP approach, wherein the battery cells are directly implemented in the respective battery packs.

Against this background, it is an object to provide an enhanced battery pack. Also, it is an object to provide at least two enhanced battery systems arranged in a battery pack. It is further an object to provide an enhanced method for manufacturing a battery pack.

### SUMMARY OF THE INVENTION

The object is attained by a battery pack having the features of claim 1. Furthermore, the object is attained by at least two battery systems arranged in a battery pack having the features of claim 10. Also, the object is attained by a method for manufacturing a battery pack having the features of claim 12.

Advantageous embodiments of the present disclosure are the subject matter of the dependent claims. Any and all combinations of at least two features disclosed in the description, the claims, and/or the figures fall within the scope of the present disclosure. Naturally, the explanations given in connection with the method equivalently relate to the battery pack and/or the at least two battery systems arranged in the battery pack according to the present disclosure without being mentioned redundantly in its/their context. In particular, linguistically common rephrasing and/or an analogous replacement of respective terms within the scope of common linguistic practice, in particular the use of synonyms backed by the generally recognized linguistic literature, are, of course, comprised by the content of the disclosure at hand without every variation having to be expressly mentioned.

In accordance with a first aspect, a battery pack is provided. The battery pack comprises at least one part of a housing, at least one battery system contacted with the at least one part of the housing, and at least one containing member contacted with the at least one part of the housing and the at least one battery system. The at least one containing member comprises a self-expendable filler material. The at least one containing member with the self-expendable filler material is contacted with the at least one part of the housing to provide stability to the battery pack and/or to the at least one battery system with respect to the at least one part of the housing.

The term "battery pack" preferably refers to a device designed to store electrical energy and supply electrical energy to a load and/or a grid connected to the battery pack. The battery pack may further be preferably designed to receive electrical energy which may be stored. When connected to a circuit, the battery pack may transfer electrons, creating an electrical current. The battery pack according to the invention may be flexibly used in different application scenarios.

The term "housing" preferably refers to a frame, an enclosure, or a compartment, to house the at least one battery system. The housing further comprises the at least one containing member.

The term "battery system" preferably refers to at least one battery module, and/or to at least one battery cell.

The battery system that refers to the at least one battery cell may have preferably no battery module, such as in the cell-to-pack approach, i.e., solution.

It should be noted that the battery system may refer to the battery modules and to the battery cells.

The at least one battery cell may be arranged in at least one part of a case. The at least one part of the case may be arranged in the at least one part of the housing and/or in the at least one battery module.

The term "battery cell" preferably refers to an individual component and/or unit within the battery module and/or the battery pack. The term "battery cell" may be a cylindrical cell, a prismatic cell, or a pouch cell. The battery cell may be an electrochemical device, such as a battery or rechargeable battery.

The term "battery module" preferably refers to a battery module comprising at least one battery cell. The battery module may be an AC battery supplying alternating current or a DC battery supplying direct current.

The battery system may further comprise a supercapacitor, a photovoltaic cell, a fuel cell, an electromechanical power converter, and/or capacitive energy source, or any other energy storage device capable of storing and/or delivering electrical energy.

The battery module and/or the battery pack may comprise the battery cells arranged parallel to the battery pack axis or perpendicular to the battery pack axis, preferably perpendicular to the battery pack axis.

The term "contacted" relates to an interaction potential, wherein a physical interaction of at least one first part of a component occurs or may occur with at least one second part of a component. The physical interaction may be between at least one point and/or at least one surface. The term "contacted" may encompass the term contactable, touchable, or joinable.

The term "containing member" preferably refers to a member that contains, i.e., encompasses, envelopes, encloses, the self-expendable filler material.

The containing member may enable preventing an uncontrolled expansion of the self-expendable filler material in the battery pack. In other words, the containing member may enable conditioning the expansion of the self-expendable filler material at a specific location in the battery pack.

In one further embodiment, the at least one containing member may have an adaptable form, so that the at least one containing member may fill a space comprised in the at least one part of the housing. In other words, the containing member may be expandable, i.e., inflatable. Preferably, the containing member may expand until reaching a surface of the at least one battery system and/or until reaching a surface of the at least one part of the housing of the battery pack. Such a surface may be at least one inner surface of the housing.

The containing member may enable handling the self-expandable filler material, preferably may enable an easy handling of the self-expendable filler material.

In one embodiment, the at least one containing member may comprise a nonconductive material, preferably may be made of a nonconductive material, more preferably the nonconductive material is plastic, more preferably polyethylene terephthalate (PET), polyamide (PA), polyethylene (PE), polycarbonate (PC), or a combination thereof.

The term "self-expendable", i.e., self-expanding, in "self-expendable filler material", corresponding to the "self-expansion" mechanism, preferably refers to a chemical transformation of the filler material, and/or precursors of the filler material. The chemical transformation may encompass an expansion of the self-expendable filler material, followed by a curing, i.e., a hardening, of the self-expendable filler material to a solid state.

The self-expansion mechanism may occur substantially spontaneously. In other words, the self-expansion mechanism may comprise no external means, such as physical means, and/or mechanical means, for expanding the self-expendable filler material.

The self-expansion mechanism may comprise forming gas bubbles in the self-expendable filler material, preferably in the liquid state, followed by growing the gas bubbles, stabilizing the gas bubbles, as the viscosity of the self-expendable filer material increases, thereby hardening, i.e., solidifying, the self-expendable filler material. The forming of the gas bubbles may result in a generation of gas during a gas-generating reaction, such as in an exothermic reaction within the self-expendable filler material in the liquid state, followed by a volatilization of the gas, thereby expanding the self-expendable filler material.

The self-expansion mechanism may not need a physical means of application of heat, such as in the mechanism of thermal decomposition of chemical blowing agents. In other aspects of the invention such physical means may be advantageous. The thermal decomposition may comprise releasing nitrogen or carbon dioxide, thereby expanding a filler material.

The self-expansion mechanism further may not need a physical means of reduction of pressure in the at least one part of the housing. The reduction of pressure may comprise expanding dissolved gas comprised in a polymer mass, thereby expanding a filler material.

The self-expansion mechanism further may not need a mechanical means, such as in the mechanism of mechanical whipping of gases. The mechanical whipping may comprise frothing a polymer matrix, thereby hardening the polymer matrix and entrapping gas bubbles into the polymer matrix, thereby expanding the polymer matrix, i.e., thereby expanding a filler material.

The self-expansion mechanism may further not need a mechanical means, such as in the mechanism of incorporating a further material, such as hollow microspheres, or gas-filled beads, into a filler material. The hollow microsphere may serve as means for expanding the filler material. The incorporating may comprise gas-filled beads expanding under application of heat, thereby expanding a filler material.

The term "filler material" preferably refers to a material that may fill a space, i.e., a void, or a volume. The void may be free, i.e., available, or unoccupied. In other words, the filler material fills an available space in the at least one part of the housing.

In one embodiment, the self-expendable filler material may comprise one component, such as a polymer, for example, selected from the group of materials of polyurethane (PU), or epoxy.

In one further embodiment, the self-expendable filler material may comprise at least two components, preferably selected from polyurethane (PU), preferably thermoplastic polyurethane, and/or from epoxy.

The self-expendable filler material comprising at least two components comprises a substantial wide range of material properties, compared to the self-expendable filler material comprising one component.

In one embodiment, the at least one containing member may be a bag, preferably the bag may comprise the self-expendable filler material made of the at least two components, or the bag may comprise at least two precursors of the at least two components, more preferably the bag may be a closed bag.

In one embodiment, the bag may be sealed and may comprise at least one opening, preferably the opening being selected from one of cutouts for terminals, cutouts for cooling fittings, pre-welded channels or pre-welded sections.

In one embodiment, the at least two precursors of the at least two components may be in separate compartments, the compartments may be separated by a barrier element. Such a barrier element may be selected of a sheet material, a plate-shaped component, or the like.

A removal, such as a breaking, of the barrier element, may result in contacting the at least two precursors. The contacting may result in a chemical reaction of the at least two precursors together, resulting in the release of a blowing agent, thereby forming and expending the self-expendable filler material, followed by hardening the self-expandable filler material, or simultaneously expending and hardening the self-expandable filler material.

The removal, such as the breaking, of the barrier element, may enable to decide when the self-expendable filler material should expand, for example, to postpone the beginning of the expansion of the self-expendable filler material during manufacturing the battery pack. It should be noted that the removal of the barrier element may occur at any moment of the manufacturing of the battery pack.

The term "stability" preferably refers to a property of a device to support, or to stabilize, a further device. In other words, the at least one containing member with the self-expendable filler material may provide support to the battery pack and/or to the at least one battery system with respect to the at least one part of the housing. The at least one containing member with the self-expendable filler material may support, i.e., hold, carry, one part of the at least one battery system. The at least one containing member with the self-expendable filler material may support the at least one battery system.

In another embodiment, the at least one containing member may be a foil, i.e., a sheet, preferably the foil is folded over the self-expendable filler material.

The folding of the foil over the self-expendable filler material may enable stopping the self-expendable filler material from leaking out in the battery pack.

In another embodiment, the at least one containing member may be a tube, preferably the tube is a thin-walled tube.

The thin-walled tube eliminates the need to weld all the sides of the at least one containing member, especially eliminates the need to weld four sides of the containing member. The thin-walled tube enables to weld only two sides of the containing member.

The at least one containing member with the self-expendable filler material may prevent the at least one battery system from moving, i.e., displacing, translating, in a direction parallel to the battery pack axis, in a direction perpendicular to the battery pack axis, or from rotating, in the at least part of the housing. Thus, displacements of the at least one battery system may be reduced, i.e., restricted, with respect to the at least one part of the housing. Thus, the at least one containing member with the self-expendable filler material may provide enhanced stability to the at least one battery system with respect to the at least one part of the housing.

The at least one containing member with the self-expendable filler material may further provide a reduction of loads of the at least one battery system with respect to the at least one part of the housing.

The at least one containing member with the self-expendable filler material may further provide a reduction of bending loads, preferably during the manufacturing of the battery pack. The at least one battery system may be introduced in the at least one part of the housing, preferably the at least one battery system may contact two parts of the housing, thus bending loads are created on the at least one battery system. The bending loads may be a result of a bending, i.e., a substantially flexing, of the at least one battery system, such as a beam. The at least one containing member with the self-expendable filler material may be contacted with the at least one part of the housing and the at least one battery system, thus may provide a reduction of the bending loads.

Shocks and/or vibrations may be applied on the at least one battery system during the manufacturing of the battery pack, and/or the lifecycle of the battery pack. The at least one containing member with the self-expendable filler material may provide a reduction of shocks and/or vibrations to the at least one battery system.

The at least one containing member with the self-expendable filler material may further provide a reduction of noise, vibration, and harshness (NVH) of the at least one battery system. NVH may refer to vibrations that end user, driver, may feel and/or hear due to a resonance of one device.

The at least one containing member with the self-expendable filler material may further provide enhanced stability, i.e., support, to the battery pack.

The at least one containing member with the self-expendable filler material preferably contacts elements arranged in the at least one part of the housing. The elements may be or are electronic elements, cooling components, wiring, mechanical clamps, or the like. The at least one containing member with the self-expendable filler material may provide enhanced stability to the elements and to the battery pack. In other words, containing member with the self-expandable filler material stabilizes everything in the at least one part of the housing, i.e., inside the housing.

The at least one containing member with the self-expendable filler material may further provide a reduction of the loads, preferably a reduction of the bending loads, a reduction of shocks and/or vibrations to the battery pack, and/or NVH of the battery pack.

The at least one containing member with the self-expendable filler material may further provide thermal and/or fire insulation properties to the battery pack and/or to the at least one battery system with respect to the at least one part of the housing.

The at least one containing member with the self-expendable filler material may further provide a reduction of heat transfer from the environment, for example, when the battery pack is exposed to high and low temperatures, such as extremely high (greater than 50°C) and/or extremely low (lower than 0 °C) temperatures. The at least one containing member with the self-expendable filler material may thereby provide an enhancement of the health and/or lifetime and/or longevity of the battery pack.

According to the presented battery pack, there may be provided a battery pack with an enhanced tolerance compensation, especially compared to adding a foam pad beneath the module. The presented battery pack may ensure, i.e., provide, an enhanced stability, preferably an enhanced support, for components arranged inside the housing. Thereby, no additional fixing of components inside the housing may be needed.

The presented battery pack may enable the at least one battery system to be easily removeable and/or replaceable. This may be beneficial for retrofitting and/or maintenance.

The presented battery pack may enable the at least one battery system and/or the at least one containing member with the self-expendable filler material to be preferably easily removeable and/or replaceable without impacting the working nor the efficiency of the battery pack thereafter.

The presented battery pack may ensure that the at least one part of the housing may comprise any type of battery systems, such as any battery modules and/or any battery cells. The presented battery pack may comprise, i.e., house, the battery systems independently from their conformation, in series or in parallel, and/or independently from the conformation of the battery modules and/or the battery cells in the battery pack. The presented battery pack may further comprise, i.e., house, the battery systems independently from the number of the battery modules and/or the battery cells in the battery pack.

According to the presented battery pack, there may be provided a battery pack with enhanced battery health.

The term "battery health" preferably refers to degradation effects of the electrolyte and/or the cells in the battery systems. The degradation effects may comprise aging effects and the like. The degradation effects may be measured via voltage measurements, charging / discharging of the battery systems and/or analyzing gradients of the I/Q curves.

In one embodiment, the at least one containing member with the self-expendable filler material may provide stability to the battery pack and/or to the at least one battery system in at least one first direction, and/or in at least one second direction, preferably perpendicular to the at least one first direction with respect to the at least one part of the housing.

The term "plate" preferably refers to a base plate and/or to a vent plate and/or to a cooling plate (also referred to as a cold plate).

The at least one containing member with the self-expendable filler material may further have a function of a plate, such as a holder, so that no supplementary holding for a wiring, and/or for cooling pipes, for example, may be needed inside the housing. The wiring may refer to grounding wirings, electric wirings, or the like, arranged in the at least one part of the housing. The cooling pipes may refer to a plate, such as a cooling plate, fixed on the outside of the housing, or between the battery cells.

In a further embodiment, the battery pack may comprise at least one plate, preferably the at least one plate selected from one of a base plate, a vent plate, or a cooling plate.

In one embodiment, the at least one plate is a base plate. The base plate may be preferably configured for placing, and/or positioning, and/or holding, and/or keeping in place the at least one battery system.

In one embodiment, the at least one plate is a vent plate (also referred to as a venting plate). The vent plate may be preferably configured for guiding (venting) gases away from the at least one battery system.

In one further embodiment, the at least one plate is a cooling plate. The cooling plate may be preferably configured for cooling the at least one battery system.

In one further embodiment, the at least one plate comprises at least two of the base plate, the vent plate, or the cooling plate.

The at least one plate may be preferably contacted with the at least one battery system, preferably the at least one plate is contacted on top of or on the bottom of the at least one battery module, and/or the at least one plate may be contacted with the at least one part of the housing, and/or the at least one plate may be comprised in the at least one part of the housing, and/or the at least one plate may be comprised in the at least one battery module. The at least one containing member with the self-expendable filler material may be contacted with the at least one plate.

Preferably, the at least one plate may comprise at least two channels and the at least one containing member with the self-expendable filler material may be contacted with the at least two channels.

The channels may preferably be integrated channels in the at least one plate. The channels may enable venting gasses, or cooling.

The at least one containing member with the self-expendable filler material may provide a protection from damage and/or a reduction of vibration and/or shocks to the at least one plate.

The at least one containing member with the self-expendable filler material may further provide stability to the at least one plate.

It may not be easy to keep the cooling plate attached to the battery module during operating the battery pack, i.e., to maintain thermal and/or structural contact of the cooling plate to the battery module after the installation of the battery pack is finished.. It may be beneficial to ensure, i.e., provide, stability of the cooling plate during operating the battery pack by having the containing member with the self-expendable filler material pressing the cooling plate to the at least one battery system, especially during operating of a vehicle.

In a further embodiment, the at least one containing member with the self-expendable filler material may be contacted or contactable with at least one part of a bottom surface of the housing and at least one part of a bottom surface of the at least one battery system, and/or with at least one part of an upper surface of the housing and at least one part of an upper surface of the at least one battery system, and/or with at least one part of a side surface of the housing and at least one part of a side surface of the at least one battery system.

The at least one containing member with the self-expendable filler material of this embodiment may provide an enhanced stability to the battery pack and/or to the at least one battery system with respect to the at least one part of the housing.

In a further preferred embodiment, the at least one containing member with the self-expendable filler material may be contacted with at least one part of a bottom surface of the housing and at least one part of a bottom surface of the at least one battery system, with at least one part of an upper surface of the housing and at least one part of an upper surface of the at least one battery system.

The at least one containing member with the self-expendable filler material of this embodiment may provide an enhanced stability to the battery pack and/or to the at least one battery system with respect to the at least one part of the housing.

In a further embodiment, the at least one containing member with the self-expendable filler material may be contacted with substantially the middle of the bottom surface of the housing and may be contacted with substantially the middle of the bottom surface of the at least one battery system. In other words, the at least one battery system contacted with the at least one part of the housing may behave like a beam constrained on the sides/perimeter. This means that the at least one battery system may benefit from having support, i.e., stability, in the middle, where a substantially large displacement of the battery system during dynamic loads is expected. Thus, the at least one containing member with the self-expendable filler material is preferably contacted with substantially the middle of the bottom surface of the at least one battery system, i.e., where the at least one containing member with the self-expendable filler material would act as a pillar on a bridge.

In a further embodiment, the at least one containing member with the self-expendable filler material may be contacted with substantially all of the bottom surface of the housing and may be contacted with substantially all of the bottom surface of the at least one battery system. This may increase the support, i.e., the stability, to the at least one battery system.

The at least one containing member with the self-expendable filler material of this embodiment may provide enhanced stability to the battery pack and/or to the at least one battery system with respect to the at least one part of the housing.

In accordance with a further aspect, at least two battery systems arranged in a battery pack, the battery pack comprises at least one part of a housing, are provided. The at least two battery systems are arranged in the at least one part of the housing. At least one containing member is contacted between the at least two battery systems. The at least one containing member comprises a self-expendable filler material. The at least one containing member with the self-expendable filler material is contacted between the at least two battery systems to provide stability to the to the battery pack and/or to the at least two battery systems.

In one embodiment, the at least one containing member may have an adaptable form, so that the at least one containing member may fill a space comprised in between the at least two battery systems; and/or the at least one containing member may be selected from one of a bag, a foil, or a tube and/or the at least one containing member with the self-expendable filler material to provide battery system - to - battery system thermal and/or fire insulation properties to the battery pack and/or to the at least one battery system with respect to the at least two battery systems.

In a further embodiment, the bag may comprise the self-expendable filler material made of the at least two components, or the bag may comprise at least two precursors of the at least two components, more preferably the bag may be a closed bag. The foil is preferably folded over the self-expendable filler material. The tube may preferably be a thin-walled tube.

The first aspect of the presented invention related to the battery pack with the at least one containing member with the self-expendable filler material contacted with the at least one part of a bottom surface of the housing and the at least one part of a bottom surface of the at least one battery system; and/or with the at least one part of an upper surface of the housing and the at least one part of an upper surface of the at least one battery system. The battery pack may provide a reduction of heat transfer from the environment. The presented battery pack may provide a reduction of a degradation and/or aging and an enhanced performance of the battery pack, in comparison to the second aspect of the presented invention related to the at least two battery systems arranged in the battery pack with the at least one containing member may be contacted between the at least two battery systems. In other words, the second aspect of the presented invention only provides thermal and/or fire insulation properties between the at least two battery systems, whereas the first aspect of the presented invention provides overall thermal and/or fire insulation properties of the at least one battery system, thereby impacting more the health of the battery pack.

In accordance with a further aspect, a method for manufacturing a battery pack is provided, the battery pack comprises at least one part of a housing, at least one battery system, at least one containing member, the at least one containing member comprising a self-expendable filler material. The method comprises the steps of introducing the at least one containing member with the self-expendable filler material into the at least one part of a housing. The method further comprises the subsequent step of introducing the at least one battery system into the at least one part of the housing. Subsequently, the self-expendable filler material expands spontaneously between the at least one part of the housing and the at least one battery system, so that the at least one containing member contacts with the at least one part of the housing to provide stability to the battery pack and/or to the at least one battery system with respect to the at least one part of the housing.

The step of the self-expendable filler material expands spontaneously between the at least one part of the housing and the at least one battery system, so that the at least one containing member contacts with the at least one part of the housing, provides substantially maximum stability because the containing member complies to substantially all the surface of the at least one part of the housing the containing member reaches.

In other words, the step of the self-expendable filler material expands spontaneously after the step of the introducing of the at least one battery system is advantageous in that the at least one battery system, such as a battery module, is pressed by the containing member with the self-expendable filler material.

In one embodiment, the introducing of the at least one battery system into the at least one part of the housing is conducted prior to the introducing of the at least one containing member with the self-expendable filler material into the at least one part of a housing.

In one embodiment, the introducing may comprise introducing the at least one containing member in the at least one part of the housing, and filling the self-expendable filler material in the at least one containing member through at least one first port arranged on the at least one part of the housing and through at least one second port arranged on the containing member, the at least one second port is connected or connectable to the at least one first port. The method may further comprise sealing the at least one first port and the at least one second port.

In one further embodiment, the filling of the self-expendable filler material in the at least one containing member may be conducted after the introducing of the at least one battery system.

In one further embodiment, the method further comprises closing the at least one part of the housing, and the filling of the self-expendable filler material into the at least one containing member may be conducted after the closing of the housing.

The filling of the self-expendable filler material into the at least one containing member conducted after the closing of the housing may enable enhancing the stability to/of the battery pack, as the filling of the self-expendable filler material may be conducted at the very end in the method for manufacturing a battery pack. Thus, the at least one containing member with self-expendable filler material may fill substantially all available space, so that no available space may remain to provide an enhanced stability to the battery pack and/or to the at least two battery systems. After the closing of the housing of the battery pack, there is further no need to use gravity for filling, spreading, the self-expendable filler material. The self-expandable filler material may be filled by pumping in the at least one containing member by using a pressurized system. The method for manufacturing the battery pack may therefore be simplified and sped up.

In a further aspect, a vehicle is provided. The vehicle, preferably an electric vehicle (EV), comprises the battery pack or the at least two battery systems arranged in a battery pack, preferably the battery pack being a traction battery.

"A(n)" in the present case should not necessarily be understood to be restrictive to exactly one element. Rather, a plurality of elements, such as, for example, two, three or more, can also be provided. Any other numeral used here, too, should not be understood to the effect that there is a restriction to exactly the stated number of elements. Rather, numerical deviations upwards and downwards are possible, unless indicated to the contrary.

Further possible implementations of the invention also comprise not explicitly mentioned combinations of any features or embodiments that are described above or below regarding the exemplary embodiments. In this case, a person skilled in the art will also add individual aspects as enhancements or supplementation to the respective basic form of the invention.

### DESCRIPTION OF THE FIGURES

Fig. 1 shows a schematic example of a battery pack;
Fig. 2 shows a refinement of a battery pack;
Fig. 3 shows a further refinement of a battery pack;
Fig. 4 shows a further refinement of a battery pack;
Fig. 5 shows a further refinement of a battery pack;
Fig. 6 shows a further refinement of a battery pack;
Fig. 7 shows a further refinement of a battery pack;
Fig. 8 shows a further refinement of a battery pack;
Fig. 9 shows a further refinement of a battery pack;
Fig. 10 shows a further refinement of a battery pack;
Fig. 11 shows a further refinement of a battery pack;
Fig. 12 shows an example of a containing member;
Fig. 13 shows a further exemplary refinement of a containing member;
Fig. 14 shows a further refinement of a battery pack;
Fig. 15 shows a schematic example of at least two battery systems; and
Fig. 16 shows a schematic flow chart of a method for manufacturing the battery pack.

### DETAILED DESCRIPTION OF THE INVENTION

Unless indicated to the contrary, elements that are the same or functionally the same have been given the same reference signs in the figures. It should also be noted that the illustrations in the figures are not necessarily true to scale.

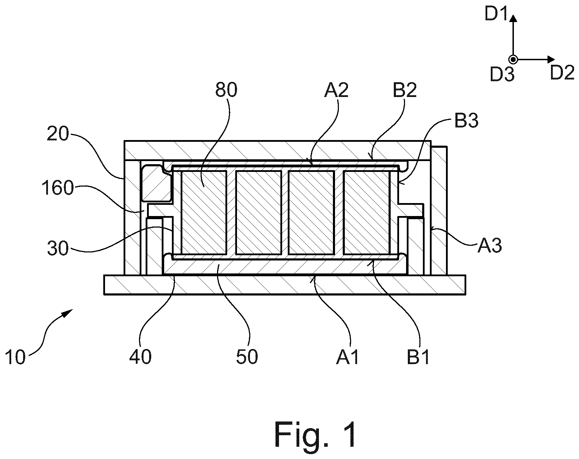

Fig. 1 shows a schematic example of a battery pack 10. The battery pack 10 comprises a housing 20. The battery pack 10 further comprises a battery system 30. Fig. 1 shows, in an example, the battery system 30 as one battery module. The battery system 30 comprises an energy storage unit 80. The energy storage unit 80 may be a battery cell. Fig. 1 shows the battery system 30 contacted with a part of the housing 20. The battery system 30 as one battery module may not be contacted with the housing 20 of the battery pack 10 (not shown in the figures).

Fig. 1 further shows an example of a closed housing 20. The closed housing 20 encloses the battery system 30. The closed housing 20 comprises a space 160. The space 160 may be a space between the at least one housing 20 and the at least one battery system 30.

In one example, the battery pack 10 as illustrated in Fig. 1 comprises the energy storage unit 80 extending in a first direction D 1.

In a further example (not shown in the Figs.), the battery pack 10 comprises the energy storage unit 80 extending in a second direction D2 perpendicular to the first direction D1.

Fig. 1 further shows a first spatial configuration, a second spatial configuration and a third spatial configuration of a containing member 40 comprising a self-expendable filler material 50. The containing member 40 is contacted with at least one part of the housing 20 and the at least one battery system 30.

Fig. 1 further shows a bottom surface A1 of the housing 20, a bottom surface B1 of the battery system 30, an upper surface A2 of the housing 20, an upper surface B2 of the at least one battery system 30, a side surface A3 of the housing 20 and a side surface B3 of the at least one battery system 30.

The first spatial configuration refers to the containing member 40 with the self-expendable filler material 50 contacted with a part of the bottom surface A1 and a part of the bottom surface B1.

The second spatial configuration refers to the containing member 40 with the self-expendable filler material 50 contacted with a part of the upper surface A2 and a part of the upper surface B2.

The third spatial configuration refers to the containing member 40 with the self-expendable filler material 50 contacted with a part of the side surface A3 and a part of the side surface B3.

The containing member 40 with the self-expendable filler material 50 of the first spatial configuration, the second configuration, and the third configuration, provides stability to the battery pack 10 and to the at least one battery system 30 with respect to the at least one part of the housing 20.

The containing member 40 with the self-expendable filler material 50 of the first spatial configuration provides stability to the battery pack 10 and to the at least one battery system 30 with respect to the at least one part of the housing 20 in the first direction D1.

The containing member 40 with the self-expendable filler material 50 of the second spatial configuration provides stability to the battery pack 10 and to the at least one battery system 30 with respect to the at least one part of the housing 20 in the first direction D 1.

The containing member 40 with the self-expendable filler material 50 of the third spatial configuration provides stability to the battery pack 10 and to the at least one battery system 30 with respect to the at least one part of the housing 20 in the second direction D2 and in a third direction D3 perpendicular to the first direction D1 and to the second direction D2.

The containing member 40 with the self-expendable filler material 50 fills the space 160, preferably until substantially no space 160 remains.

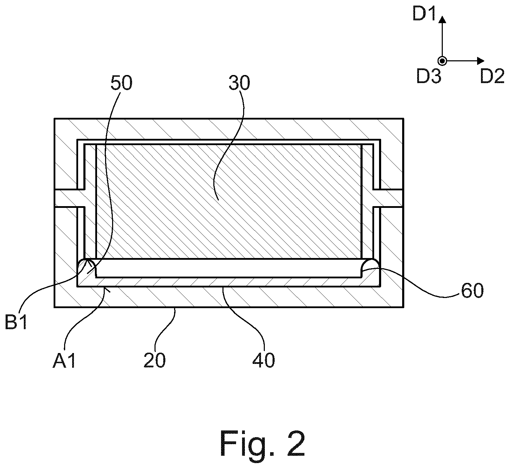

In Figs. 2 to 6, an example of the battery pack 10 comprising a plate 60 is shown. The containing member 40 comprises the self-expendable filler material 50.

The plate 60 is, in one example, a base plate. The base plate may be void of channels 70. The base plate is configured for positioning the battery system 30.

The plate 60 is, in a further example, a vent plate. The vent plate may comprise channels 70. The vent plate is configured for guiding gas away from the battery system 30.

The plate 60 is, in another example, a cooling plate. The cooling plate may comprise channels 70. The cooling plate is configured for cooling the battery system 30.

In Fig. 2 to 5, the containing member 40 is a bag 90 or a foil 100.

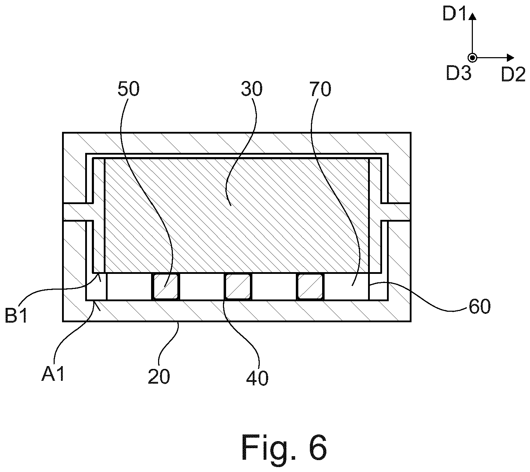

In Fig. 6, the containing member 40 is a tube 110, for example, a thin-walled tube.

Fig. 2 shows a further refinement of a battery pack 10.

In Fig. 2, the plate 60 is a base plate. The base plate is void of channels 70.

According to Fig. 2, the plate 60 is contacted with the bottom of the battery system 30. It should be noted that the plate 60 may be contacted with a top of the battery system 30, i.e., with the upper surface A2 of the battery system 30 (not shown on the Figs.).

The containing member 40 with the self-expendable filler material 50 is contacted with the plate 60.

Still according to Fig. 2, the containing member 40 with the self-expendable filler material 50 is contacted with the bottom surface A1 of the housing 20.

The containing member 40 with the self-expendable filler material 50 according to Fig. 2 provides stability to the plate 60. The containing member 40 with the self-expendable filler material 50 further provides stability to the battery system 30 and to the battery pack 10.

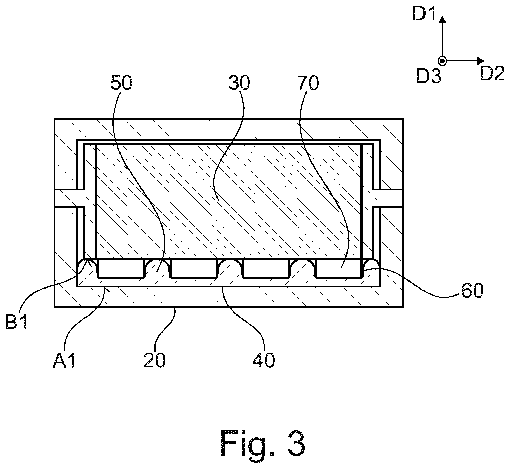

Fig. 3 shows a further refinement of a battery pack 10.

According to Fig. 3, the plate 60 is contacted with the bottom of the battery system 30, i.e., with the bottom surface B1 of the battery system 30. It should be noted that the plate 60 may be contacted with a top of the battery system 30, i.e., with the upper surface A2 of the battery system 30 (not shown on the Figs.).

The containing member 40 with the self-expendable filler material 50 is contacted with the plate 60 and with the channels 70. The containing member 40 with the self-expendable filler material 50 is further contacted between two channels of the channels 70.

Still according to Fig. 3, the containing member 40 with the self-expendable filler material 50 is contacted with the bottom surface A1 of the housing 20.

The containing member 40 with the self-expendable filler material 50 according to Fig. 3 provides stability to the plate 60 and to the channels 70. The containing member 40 with the self-expendable filler material 50 further provides stability to the battery system 30 and to the battery pack 10.

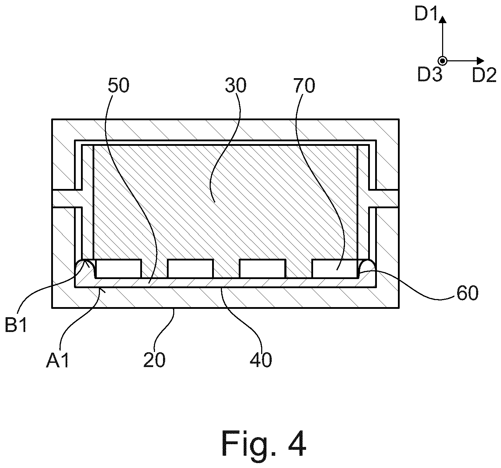

Fig. 4 shows a further refinement of the battery pack 10.

According to Fig. 4, the plate 60 is comprised in the battery system 30. The plate 60 is arranged on the bottom of the battery system 30, i.e., on the bottom surface B1 of the battery system 30.

The containing member 40 with the self-expendable filler material 50 is further contacted with the bottom surface A1 of the housing 20.

The containing member 40 with the self-expendable filler material 50 is contacted with the plate 60 and with the channels 70.

The containing member 40 with the self-expendable filler material 50 according to Fig. 4 provides stability to the battery system 30 comprising the plate 60 and to the battery pack 10.

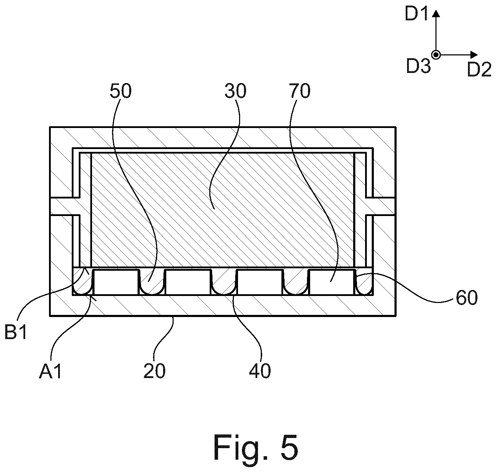

Fig. 5 shows a further refinement of the battery pack 10.

According to Fig. 5, the plate 60 is contacted with the bottom surface A1 of the housing 20 and with the bottom surface B 1 of the battery system 30. It should be noted that the plate 60 may be contacted with the top of the housing 20, i.e., with the upper surface B2 of the housing 20 (not shown on the Figs.).

The containing member 40 with the self-expendable filler material 50 is contacted with the plate 60 and with the channels 70. The containing member 40 with the self-expendable filler material 50 is further contacted between two channels of the channels 70.

The containing member 40 with the self-expendable filler material 50 according to Fig. 5 provides stability to the plate 60 and to the channels 70. The containing member 40 with the self-expendable filler material 50 further provides stability to the battery system 30 and to the battery pack 10.

Fig. 6 shows a further refinement of a battery pack 10.

According to Fig. 6, the plate 60 is contacted with the bottom surface B1 of the battery system 30 and with the bottom surface A1 of the housing 20. It should be noted that the plate 60 may be contacted with a top of the battery system 30 and with a top of the housing 20 (not shown on the Figs.).

The containing member 40 with the self-expendable filler material 50 is contacted between the channels of the channels 70 as shown on Fig.6. It should be noted that the containing member 40 may not be restricted to be between the channels 70 but may also be contacted with the bottom surface A1 of the housing 20 and with the bottom surface B1 of the battery system 30, for example (not shown on the Figs).

The containing member 40 with the self-expendable filler material 50 in Fig. 6 provides stability to the channels 70. The containing member 40 with the self-expendable filler material 50 further provides stability to the battery system 30 and to the battery pack 10.

The containing member 40 with the self-expendable filler material 50 as shown in Figs. 2, 3, 4 and 5 may provide an enhanced stability to the battery pack 10 and/or to the at least one battery system 30 with respect to the at least one part of the housing 20 by comparison to the containing member 40 with the self-expendable filler material 50 as shown in Fig. 6.

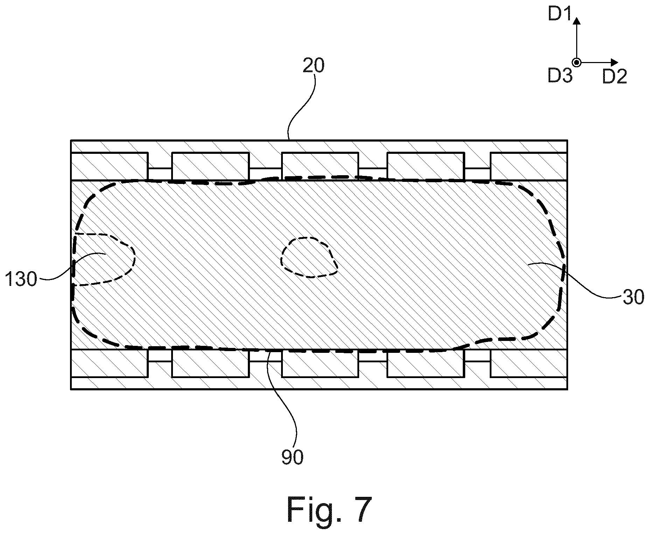

Fig. 7 shows a further refinement of a battery pack 10.

The containing member 40 according to Fig. 7 is a bag 90. The bag 90 is sealed and comprises openings 130. The openings 130 are, for example, selected from one of cut-outs for terminals, cut-outs for cooling fittings, pre-welded channels or pre-welded sections. The openings 130 have the shape, for example, of bags, such as bags in ice cube bags.

In one example, the bag 90 has a rectangular shape. However, the shape of the bag 90 should not be restricted to the rectangular shape.

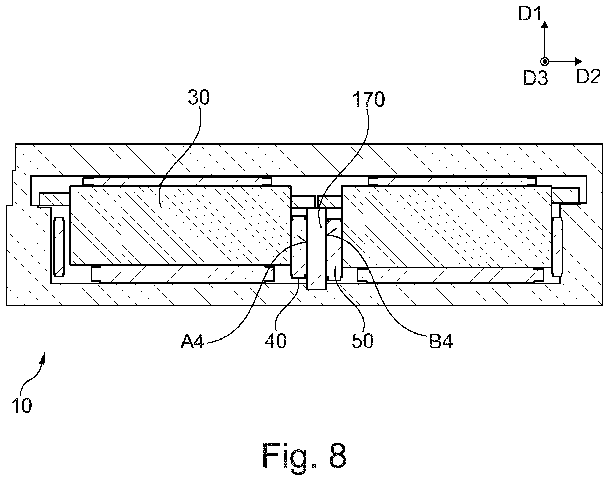

Fig. 8 shows a further refinement of a battery pack 10. The battery pack 10 shown in Fig. 7 comprises two battery systems 30, as two modules, separated by a cross beam 170. The cross beam 170 may be a part of the housing 20. Alternatively, the cross beam 170 may be a separate component from the housing 20.

Fig. 8 shows a fourth spatial configuration of the containing member 40 comprising the self-expendable filler material 50.

In the fourth spatial configuration, the containing member 40 with the self-expendable filler material 50 is contacted with at least one part of the battery system 30 and at least one part of the cross beam 170.

In a further example, two containing members 40 with the self-expendable filler material 50 are arranged on either side of the cross beam 170 and contacted with at least one side surface A4, B4 of the cross beam 170.

Fig. 8 shows, as an example, two containing members 40 with the self-expendable filler material 50 contacted with two side surfaces A4, B4 of the cross beam 170.

Fig. 8 further shows three containing members 40 with the self-expendable filler material 50 in the first spatial configuration, in the second spatial configuration and in the third spatial configuration, as illustrative examples.

It should be understood that only the fourth spatial configurations, or a combination of the fourth spatial configuration and at least one of the first spatial configuration, the second spatial configuration, or the third spatial configuration may be possible (not shown in the Figs.).

The containing member 40 with the self-expendable filler material 50 of the fourth spatial configuration provides stability to the battery pack 10.

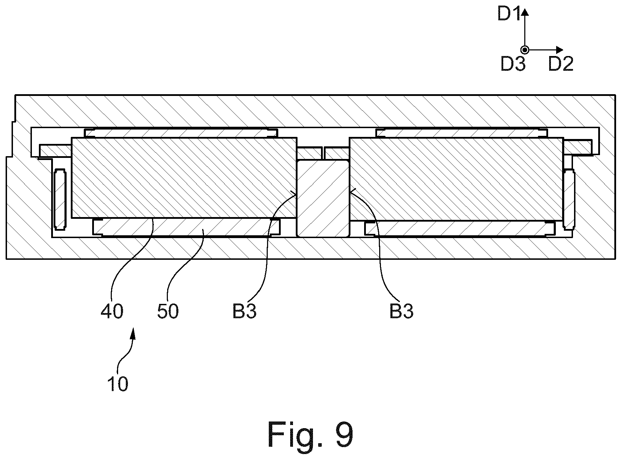

Fig. 9 shows a further refinement of a battery pack 10.

Fig. 9 shows, in a further illustrative example, one containing member 40 with the self-expendable filler material 50 contacted with at least one part of the side surface B3 of two battery systems 30.

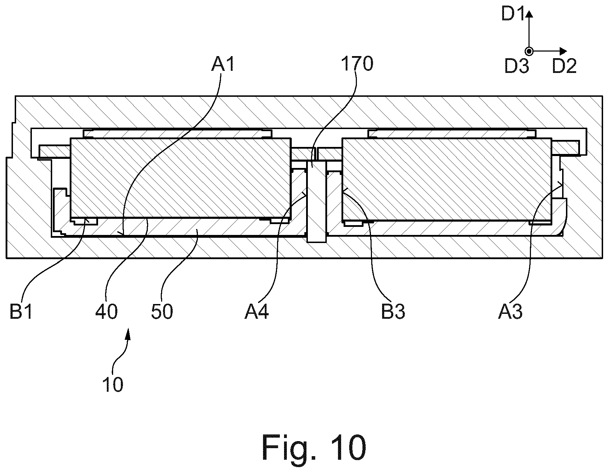

Fig. 10 shows a further refinement of a battery pack 10.

Fig. 10 shows, in an illustrative example, the battery pack 10 comprising two battery systems 30 separated by the cross beam 170. At least one containing member 40 with the self-expendable filler material 50 is contacted with the at least one part of the housing 20, the at least on part of the battery system 30 and the at least one part of the cross beam 170.

In particular, Fig. 10 shows one containing member 40 with the self-expendable filler material 50 contacted with the bottom surface A1 of the housing 20, the bottom surface B1 of the battery system 30, the side surface A3 of the housing 20, the side surface B3 of the battery system 30, and one side surface A4, B4 of the cross beam 170.

Fig. 10 further shows two containing members 40 with the self-expendable fille material 50 contacted with the two battery systems 30, but it should be understood that only one containing member 40 with the self-expendable fille material 50 can be contacted with only one battery system 30 may be possible (not shown on Fig. 10).

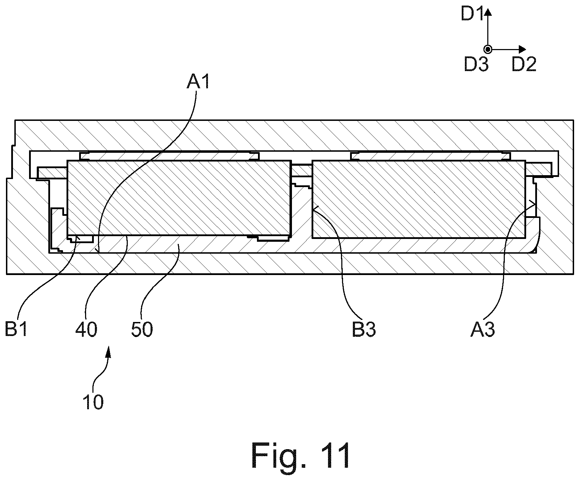

Fig. 11 shows a further refinement of a battery pack 10.

Fig. 11 shows the battery pack 10 comprising two battery systems 30. The battery pack 10 further comprises at least one containing member 40 with the self-expendable filler material 50 contacted with the at least one part of the housing 20 and the at least on part of two battery systems 30.

In particular, Fig. 11 shows one containing member 40 with the self-expendable filler material 50 contacted with the bottom surface A1 of the housing 20, the bottom surface B1 of the two battery systems 30, the side surface A3 of the housing 20, the side surface B3 of the two battery systems 30. In one example (not shown in the Figs.), the battery pack 10 may comprise one containing member 40 with the self-expendable filler material 50 contacted with the upper surface A2 of the housing 20, the upper surface B2 of the two battery systems 30, the side surface A3 of the housing 20, and the side surface B3 of the two battery systems 30.

The at least one containing member 40 has, for example, an adaptable form, so that the containing member 40 fills a space 160 comprised in between the at least two battery systems 30. The containing member 40 is, for example, contacted between the at least two battery systems 30.

In one example, the containing member 40 is a bag 90, preferably the bag 90 comprises the self-expendable filler material 50 made of the at least two components, or the bag 90 comprises at least two precursors of the at least two components; more preferably the bag 90 is a closed bag.

In a further example, the containing member 40 is a foil 100, preferably the foil 100 is folded over the self-expendable filler material 50. The foil 100 may be sealed at least two ends.

In a further example, the containing member 40 is a tube 110, preferably the tube 110 is a thin-walled tube. The tube 110 may be sealed at two ends.

The at least one containing member 40 with the self-expendable filler material 50 is contacted between the at least two battery systems 30 to provide stability to the battery pack 10 and/or to the at least two battery systems 30. The at least one containing member 40 with the self-expendable filler material 50 provide further battery system 30 - to - battery system 30 thermal and/or fire insulation properties to the battery pack 10 and/or to the at least one battery system 30 with respect to the at least two battery systems 30.

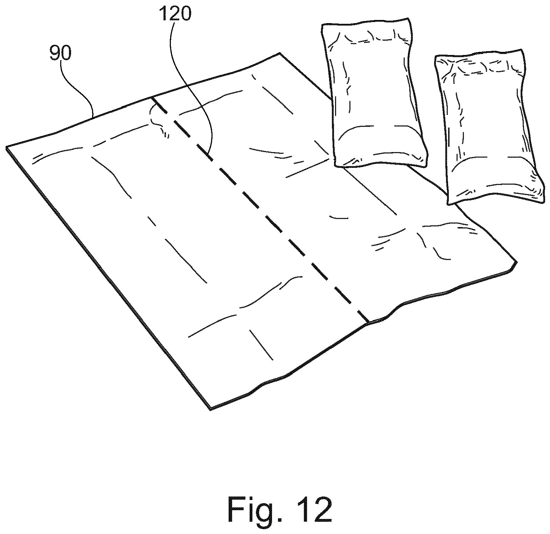

Fig. 12 shows an exemplary refinement of the containing member 40 made of the bag 90. The bag 90 comprises a barrier element 120, i.e., a separator element. Two precursors of two components of the self-expendable material 50 are in separate compartments separated by the barrier element 120.

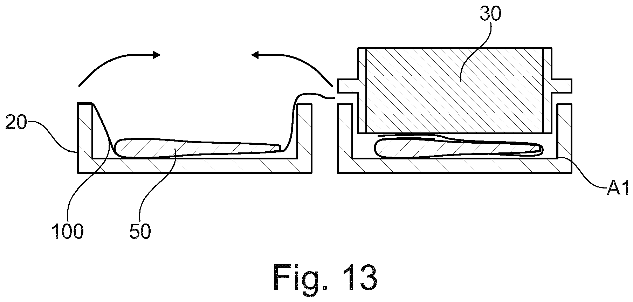

Fig. 13 shows a further exemplary refinement of the containing member 40. The containing member 40 is a foil 100. The foil 100 is contacted with the bottom surface A1 of the housing 20. The foil 100 is folded over the self-expendable filler material 50.

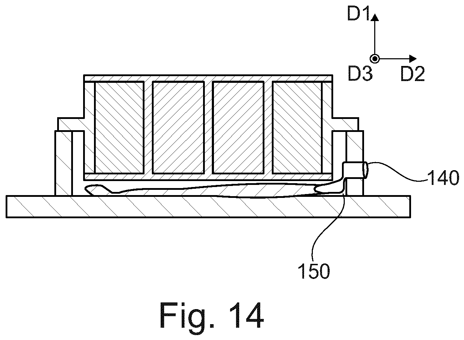

Fig. 14 shows a further refinement of the battery pack 10. Fig. 14 shows one first port 140 arranged on the housing 20. The first port 140 is arranged on a side surface of the housing 20, but it should be understood that the first port 140 is, in a further example, on the top and/or on the bottom of the housing (not shown in the Fig.). A second port 150 is arranged on the containing member 40. The first port 140 and the second port 150 are connected for filing the self-expandable filler material 50 into the containing member 40.

The first port 140 and the second port 150 may be configured to be sealed but may not need to be sealed.

In one example, the containing member 40 extends outside of the housing 20 through the first port 140. In this example, no seal in between the containing member 40 and the housing 20 may be needed. In a further example, the containing member 40 may be sealed, such as welded, glued on the first port 140 and on the on at least one part of the side surface A3 of the housing 20, i.e., inner wall of the battery pack 10.

In a further example, the containing member 40 may be pinched, and/or compressed, against the first port 140 and on at least one part of the side surface A3 of the housing 20, i.e., inner wall of the battery pack 10, to ensure sealing.

In a further example, the containing member 40 may be sealed individually. In other words, the containing member 40 is sealed by sealing the second port 150, such as by welding. The housing 20 is sealed by sealing the first port 140.

In a further example, the containing member 40 may be sealed to the housing 20 and the housing 20 is sealed by sealing the first port 140.

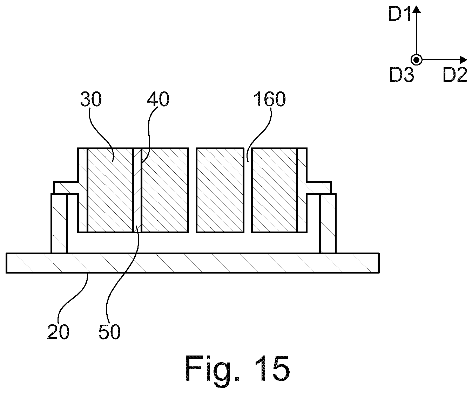

Fig. 15 shows a schematic example of at least two battery systems 30, for example, four adjacent battery systems 30, such as battery cells. The battery pack 10 comprises one part of a housing 20. The at least two battery systems 30 comprises at least one containing member 40. The containing member 40 comprises a self-expendable filler material 50. The four adjacent battery systems 30 are, for example, contacted with two ends of the part of the housing 20.

The at least one containing member 40 has, according to Fig. 15, an adaptable form, so that the containing member 40 fills a space 160 comprised in between the at least two battery systems 30. The containing member 40 is, for example, contacted between the at least two battery systems 30.

In one example, the containing member 40 is a bag 90, preferably the bag 90 comprises the self-expendable filler material 50 made of the at least two components, or the bag 90 comprises at least two precursors of the at least two components, more preferably the bag 90 is a closed bag.

In a further example, the containing member 40 is a foil 100, preferably the foil 100 is folded over the self-expendable filler material 50.

In a further example, the containing member 40 is a tube 110, preferably the tube 110 is a thin-walled tube.

The at least one containing member 40 with the self-expendable filler material 50 is contacted between the at least two battery systems 30 to provide stability to the battery pack 10 and/or to the at least two battery systems 30. The at least one containing member 40 with the self-expendable filler material 50 provide further battery system 30 - to - battery system 30 thermal and/or fire insulation properties to the battery pack 10 and/or to the at least one battery system 30 with respect to the at least two battery systems 30.

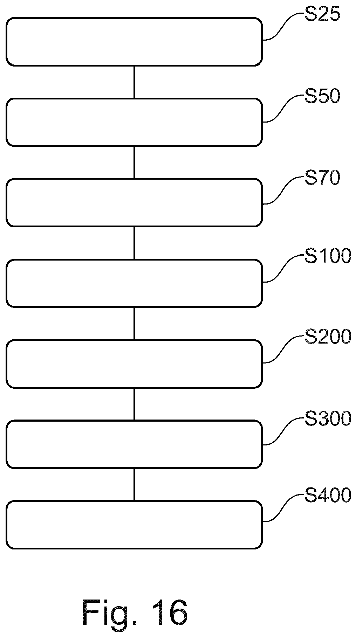

Fig. 16 shows a schematic flow chart of a method for manufacturing the battery pack 10.

The battery pack 10 comprises the at least one part of a housing 20, the at least one battery system 30, the at least one containing member 40 comprising the self-expendable filler material 50.

The battery pack 10 may comprise two battery systems 30 separated by a cross beam 170. The cross beam 170 may be a part of the housing 20. Alternatively, the cross beam 170 may be a separate component from the housing 20.

In a first example, the containing member 40 is a bag 90.

### Containing member 40 - bag 90

In the first example, the method comprises the steps of introducing S100 the at least one containing member 40 with the self-expendable filler material 50 into the at least one part of a housing 20.

The method further comprises introducing S200 the at least one battery system 30 into the at least one part of the housing 20.

The self-expendable filler material 50 expands spontaneously S300 between the at least one part of the housing 20 and the at least one battery system 30. In other words, no external mean, such as physical means, or mechanical means may be needed in the step S300 for expanding the filler material 50.

In one example, the at least one containing member 40 has an adaptable form, so that the expansion S300 of the self-expendable filler material 50 implies a simultaneous expansion of the containing member 40.

The containing member 40 with self-expendable filler material 50 expands until reaching, i.e., contacting with, the at least one part of the housing 20 to provide stability to the battery pack 10 and/or to the at least one battery system 30 with respect to the at least one part of the housing 20.

In one further example, the introducing S200 of the at least one battery system 30 into the at least one part of the housing 20 is conducted prior to the introducing S 100 of the at least one containing member 40 with the self-expendable filler material 50.

In one example, the introducing 5100 comprises introducing S25 the at least one containing member 40 in the at least one part of the housing 20. The introducing S 100 further comprises filling S50 the self-expendable filler material 50 in the at least one containing member 40 through the at least one first port 140 arranged on the at least one part of the housing 20 and through the at least one second port 150 arranged on the containing member 40, the at least one second port 150 connected to the at least one first port 140. The introducing S100 further comprises subsequent sealing S70 the at least one first port 140 and the at least one second port 150.

In a further example, the filling S50 of the self-expendable filler material 50 in the at least one containing member 40 is, alternatively, conducted after the introducing S200 of the at least one battery system 30.

In an example, the method comprises closing S400 the at least one part of the housing 20.

In a further example, the filling S50 of the self-expendable filler material 50 into the at least one containing member 40 is, alternatively, conducted after the closing S400 of the housing 20.

In one example, the bag 90 comprises the at least two precursors of the at least two components. The bag 90 further comprises the barrier element 120 to separate the two precursors of the self-expending filler material 50.

The barrier element 120 is, in one example, broken before the introducing S25 of the at least one containing member 40 in the at least one part of the housing 20. The barrier element 120 is, in another example, broken after the introducing S25 of the at least one containing member 40 in the at least one part of the housing 20.

The barrier element 120 is, in a further example, broken before the introducing S200 of the at least one battery system 30 into the at least one part of the housing 20. The barrier element 120 is, in another example, broken during the introducing S200 of the at least one battery system 30 into the at least one part of the housing 20, i.e., by a puncturing feature in the battery pack 10.

The breaking the barrier element 120 results in contacting the at least two precursors, so that the at least two precursors react together, resulting in the expending S300 of the self-expendable filler material 50.

In one further example, the bag 90 comprises the self-expendable filler material 50 made of the at least two components, preferably pre-mixed.

In one example, the bag 90 is preferably closed.

In a second example, the containing member 40 is a foil 100.

### Containing member 40 - foil 100

In the second example, the method comprises introducing S25 the at least one containing member 40 as the foil 100 in the at least one part of the housing 20, for example by placing two ends of the containing member 40 on two ends of the at least one part of the housing 20.

In another example, the two ends of the containing member 40 are placed on two ends of the cross beam 170.

The introducing S25 is followed the filling S50 of the self-expendable filler material 50 in the at least one containing member 40.

In one example, the filling S50 comprises dispensing by pouring or pumping the self-expendable filler material 50 made of two premixed components.

The filling S50 is followed by a step of folding S60 the containing member 40 made of the foil 100 over the self-expendable filler material 50.

The folding S60 enables to prevent a leakage of the self-expendable filler material 50 from the containing member 40, as illustrated on Fig. 10.

The folding S60 is followed by the introducing S200 of the at least one battery system 30 into the at least one part of the housing 20 and the self-expendable filler material 50 expands spontaneously S300 between the at least one part of the housing 20 and the at least one battery system 30, as disclosed in the first example.

In a third example, the containing member 40 is a tube 110.

### Containing member 40 - tube 110

In the third example, the method comprises the same steps as the method disclosed in the first example.

### LIST OF REFERENCE SIGNS

- 10: battery pack
- 20: housing
- 30: battery system
- 40: containing member
- 50: self-expendable filler material
- 60: plate
- 70: channels
- 80: energy storage unit
- 90: bag
- 100: foil
- 110: tube
- 120: barrier element
- 130: opening
- 140: first port
- 150: second port
- 160: space
- 170: cross beam
- A1: bottom surface of the housing
- B1: bottom surface of the battery system
- A2: upper surface of the housing
- B2: upper surface of the battery system
- A3: side surface of the housing
- B3: side surface of the battery system
- A4: side surface of the cross beam
- B4: side surface of the cross beam
- D1: direction
- D2: direction
- D3: direction

## Claims

1. A battery pack (10) comprising:
at least one part of a housing (20);
at least one battery system (30) arranged in the at least one part of the housing (20);
at least one containing member (40) contacted with the at least one part of the housing (20) and the at least one battery system (30);
the at least one containing member (40) comprises a self-expendable filler material (50);
the at least one containing member (40) with the self-expendable filler material (50) is contacted with the at least one part of the housing (20) to provide stability to the battery pack (10) and/or to the at least one battery system (30) with respect to the at least one part of the housing (20).

2. The battery pack (10) of claim 1,
wherein the at least one containing member (40) with the self-expendable filler material (50) provides stability to the battery pack (10) and/or to the at least one battery system (30) in at least one first direction (D1), and/or in at least one second direction (D2) perpendicular to the at least one first direction (D1) with respect to the at least one part of the housing (20).

3. The battery pack (10) of claims 1 or 2, further comprising:
at least one plate (60), preferably the at least one plate (60) is selected from one of:
- a base plate, the base plate configured for positioning the at least one battery system (30);
- a vent plate, the vent plate configured for guiding gas away from the at least one battery system (30); or
- a cooling plate, the cooling plate configured for cooling the at least one battery system (30);
a) the at least one plate (60) contacted with the at least one battery system (30), preferably the at least one plate (60) contacted on top of or on the bottom of the at least one battery module (30); and/or
b) the at least one plate (60) contacted with the at least one part of the housing (20); and/or
c) the at least one plate (60) comprised in the at least one part of the housing (20); and/or
d) the at least one plate (60) comprised in the at least one battery module (30);
the at least one containing member (40) with the self-expendable filler material (50) contacted with the at least one plate (60), preferably the at least one plate (60) comprises at least two channels (70) and the at least one containing member (40) with the self-expendable filler material (50) is contacted with the at least two channels (70).

4. The battery pack (10) of any one of the above claims, wherein the at least one containing member (40) with the self-expendable filler material (50) is contacted:
with at least one part of a bottom surface (A1) of the housing (20) and at least one part of a bottom surface (B 1) of the at least one battery system (30); and/or
with at least one part of an upper surface (A2) of the housing (20) and at least one part of an upper surface (B2) of the at least one battery system (30); and/or
with at least one part of a side surface (A3) of the housing (20) and at least one part of a side surface (B3) of the at least one battery system (30).

5. The battery pack (10) of claim 4, wherein the at least one containing member (40) with the self-expendable filler material (50) is contacted:
with the at least one part of the side surface (A3) of the housing (20) and the at least one part of the side surface (B3) of the at least one battery system (30); and
- with the at least one part of the upper surface (A2) of the housing (20) and the at least one part of the upper surface (B2) of the at least one battery system (30); or
- with the at least one part of a side surface (A3) of the housing (20) and the at least one part of the side surface (B3) of the at least one battery system (30).

6. The battery pack (10) of any one of the above claims, wherein
the at least one containing member (40) comprises a nonconductive material, preferably plastic, more preferably polyethylene terephthalate, PET, polyamide, PA, polyethylene, PE, polycarbonate, PC, or a combination thereof.

7. The battery pack (10) of any one of the above claims, wherein
the self-expendable filler material (50) comprises at least two components, preferably selected from polyurethane, PU, and/or from epoxy.

8. The battery pack (10) of any one of the above claims, wherein the at least one containing member (40) is selected from one of:
- a bag (90); preferably the bag (90) comprises the self-expendable filler material (50) made of the at least two components, or the bag (90) comprises at least two precursors of the at least two components; more preferably the bag (90) is a closed bag;
- a foil (100), preferably the foil (100) is folded over the self-expendable filler material (50); or
- a tube (110), preferably the tube (110) is a thin-walled tube.

9. The battery pack (10) of any of the above claims, wherein
the at least one containing member (40) has an adaptable form, so that the at least one containing member (40) fills a space (160) comprised in the at least one part of the housing (20).

10. The battery pack (10) of any one of claim 8 or 9, wherein the bag (90) is sealed and comprises at least one opening (130), preferably the opening (130) being selected from one of cutouts for terminals, cutouts for cooling fittings, pre-welded channels or pre-welded sections.

11. At least two battery systems (30) arranged in a battery pack (10), the battery pack (10) comprising at least one part of a housing (20), wherein
the at least two battery systems (30) are arranged in the at least one part of the housing (20); and
at least one containing member (40) is contacted between the at least two battery systems (30);
the at least one containing member (40) comprises a self-expendable filler material (50); and
the at least one containing member (40) with the self-expendable filler material (50) is contacted between the at least two battery systems (30) to provide stability to the battery pack (10) and/or to the at least two battery systems (30).

12. The at least two battery systems (30) of claim 11, wherein
- the at least one containing member (40) has an adaptable form, so that the at least one containing member (40) fills a space (160) comprised in between the at least two battery systems (30); and/or
- the at least one containing member (40) is selected from one of:
a bag (90); preferably the bag (90) comprises the self-expendable filler material (50) made of the at least two components, or the bag (90) comprises at least two precursors of the at least two components; more preferably the bag (90) is a closed bag;
a foil (100), preferably the foil (100) is folded over the self-expendable filler material (50); or
a tube (110), preferably the tube (110) is a thin-walled tube; and/or
- the at least one containing member (40) with the self-expendable filler material (50) provide battery system (30) - to - battery system (30) thermal and/or fire insulation properties to the battery pack (10) and/or to the at least one battery system (30) with respect to the at least two battery systems (30).

13. A method for manufacturing a battery pack (10), the battery pack (10) comprising at least one part of a housing (20), at least one battery system (30), at least one containing member (40), the at least one containing member (40) comprising a self-expendable filler material (50), the method comprising the steps of:
introducing (S100) the at least one containing member (40) with the self-expendable filler material (50) into the at least one part of a housing (20); and
introducing (S200) the at least one battery system (30) into the at least one part of the housing (20);
the self-expendable filler material (50) expands spontaneously (S300) between the at least one part of the housing (20) and the at least one battery system (30), so that the at least one containing member (40) contacts with the at least one part of the housing (20) to provide stability to the battery pack (10) and/or to the at least one battery system (30) with respect to the at least one part of the housing (20).

14. The method of claim 13, wherein the introducing (S200) of the at least one battery system (30) into the at least one part of the housing (20) is conducted prior to the introducing (S100) of the at least one containing member (40) with the self-expendable filler material (50) into the at least one part of a housing (20).

15. The method of claim 13 or 14, wherein the introducing (S100) comprises:
introducing (S25) the at least one containing member (40) in the at least one part of the housing (20); and
filling (S50) the self-expendable filler material (50) in the at least one containing member (40) through at least one first port (140) arranged on the at least one part of the housing (20) and through at least one second port (150) arranged on the containing member (40), the at least one second port (150) is connected to the at least one first port (140);
sealing (S70) the at least one first port (140) and the at least one second port (150); and
optionally the filling (S50) of the self-expendable filler material (50) in the at least one containing member (40) is conducted after the introducing (S200) of the at least one battery system (30).

16. The method of any one of claims 13 to 15, further comprising
closing (S400) the at least one part of the housing (20), and
the filling (S50) of the self-expendable filler material (50) into the at least one containing member (40) is conducted after the closing (S400) of the housing (20).

17. Vehicle, more preferably in an electric vehicle, EV, comprising the battery pack (10) of any one of claims 1 to 10 or the at least two battery systems (30) arranged in a battery pack (10) of any one of claim 11 or 12, preferably the battery pack (10) being a traction battery.
